# EUROPÄISCHE PATENTSCHRIFT

(11) **EP 3 106 530 B1**
(45) Veröffentlichungstag und Bekanntmachung des Hinweises auf die Patenterteilung: **07.06.2023**
(21) Anmeldenummer: 16174357.0
(22) Anmeldetag: 14.06.2016
(51) Int. Cl.: C22B 3/00, C22B 59/00, C22B 3/24, C22B 7/00, C22B 11/00

(54) **VERFAHREN ZUR GEWINNUNG EINES METALLHALTIGEN SEKUNDÄRROHSTOFFS**
METHOD FOR OBTAINING A METAL-CONTAINING SECONDARY RAW MATERIAL
PROCEDE DE PRODUCTION D'UNE MATIERE PREMIERE SECONDAIRE CONTENANT DU METAL

(30) Priorität: 16.06.2015 DE 102015109618
(43) Veröffentlichungstag der Anmeldung: 21.12.2016
(73) Patentinhaber: Forschungsinstitut für Anorganische Werkstoffe - Glas/Keramik- GmbH, 56203 Höhr-Grenzhausen (DE); Universität Koblenz-Landau, 55118 Mainz (DE)
(72) Erfinder: Diedel, Ralf, 56206 Hilgert (DE); Scholz, Joachim, 56321 Rhens (DE)
(74) Vertreter: MFG Patentanwälte Meyer-Wildhagen Meggle-Freund Gerhard PartG mbB

(56) Entgegenhaltungen:
- CA-A1- 2 885 496
- US-A- 5 271 760
- US-A1- 2011 046 430

## Beschreibung

### GEBIET DER ERFINDUNG

Die vorliegende Erfindung bezieht sich auf ein Verfahren zur Gewinnung eines metallhaltigen Sekundärrohstoffs, beispielsweise eines Metalls der Seltenen Erden, aus einem Aufbereitungsgut wie beispielsweise Elektroschrott oder Abfallprodukten metallurgischer Verfahren. Weiterhin betrifft die Erfindung die Verwendung eines mineralhaltigen Materials zur Gewinnung eines metallhaltigen Sekundärrohstoffs aus einem Aufbereitungsgut.

### HINTERGRUND DER ERFINDUNG

Kaum eine Gruppe chemischer Elemente hat das Leben der Menschen in den vergangenen Jahrzehnten stärker verändert als die der Seltenen Erden. Für viele Hochtechnologieprodukte stellen die Seltenen Erden einen unverzichtbaren, weil kaum substituierbaren Werkstoff dar. Sie sind insbesondere für die Umsetzung der Energiewende - von Solarzellen über energiesparende Leuchtmittel bis hin zu Hochleistungsmagneten für Elektromotoren oder Windenergieanlagen - unerlässlich. Auch die Entwicklung moderner Autos, neuer IT-Technologien und leistungsstarker medizinischer Geräte ist auf die herausragenden Materialeigenschaften der Seltenen Erden zurückzuführen.

Aufgrund ihrer geringen Konzentration in den Erzen ist die Gewinnung der Metalle der Seltenen Erden ein technologisch sehr aufwendiger und komplexer Prozess und zudem mit einem hohen Risiko durch Umweltschäden behaftet. Insbesondere die Trennung der chemisch sehr ähnlichen Elemente der Seltenen Erden erfordert eine Vielzahl an Operationsschritten und einen hohen Einsatz von Chemikalien.

Der Aufbereitung von Elektroschrott oder Abfallprodukten metallurgischer Verfahren, die Metalle der Seltenen Erden, Edelmetalle und andere selten bzw. in geringen Konzentrationen vorkommende Metalle enthalten, kommt daher große Bedeutung zu.

Bisher bekannte Verfahren zum Recycling von Metallen der Seltenen Erden, von Edelmetallen oder von anderen selten bzw. in geringen Konzentrationen vorkommenden Metallen schlagen die Durchführung einer Vielzahl von Verfahrensschritten unter Verwendung großer Chemikalienmengen vor wie beispielsweise eine fraktionierte Fällung, eine Kristallisation und/oder diverse Extraktionsstufen, um die verschiedenen Elemente beispielsweise der Gruppe der Seltenen Erden voneinander zu trennen. Notwendig ist dieser hohe technologische Aufwand deshalb, weil beispielsweise die dreiwertigen Ionen der Metalle der Seltenen Erden sehr ähnliche Ionenradien besitzen und sich deshalb nur sehr wenig in ihrem chemischen und physikalischen Verhalten unterscheiden. Beispielsweise weist Lanthan (La³⁺) bei einer Koordinationszahl 6 einen Ionenradius von 103,2 pm und Lutetium (Lu³⁺) einen Ionenradius von 86,1 pm auf. Die WO 2007/141177 A1 beschreibt beispielhaft ein bekanntes Verfahren zum Recyceln von Leuchtstofflampen.

Die bisher bekannten Verfahren zum Recycling von Metallen der Seltenen Erden, von Edelmetallen oder von anderen selten bzw. in geringen Konzentrationen vorkommenden Metallen sind somit technologisch aufwendig, sehr energieintensiv und aufgrund der Notwendigkeit aggressiver Chemikalien umweltschädlich. Außerdem ist es notwendig, dass der Anteil der jeweils zurückzugewinnenden Metalle möglichst hoch ist, Elektroschrott also beispielsweise sortenrein vorliegt.

Die CA 2 885 496 A1 beschreibt ein Verfahren zur Gewinnung von Seltenen Erden aus Bergbauabwasser. Dabei werden die Seltenen Erden aus zunächst an einem feinkörnigen Mineralmaterial, anschließend an einem grobkörnigen Mineralmaterial adsorbiert und danach von dem feinkörnigen und dem grobkörnigen Mineralmaterial desorbiert.

Aufgabe der vorliegenden Erfindung ist es, ein verbessertes Verfahren zur Gewinnung eines metallhaltigen Sekundärrohstoffs aus einem Aufbereitungsgut sowie eine verbesserte Anlage zur Gewinnung eines metallhaltigen Sekundärrohstoffs aus einem Aufbereitungsgut zur Verfügung zu stellen.

### BESCHREIBUNG DER ERFINDUNG

Diese Aufgabe wird durch das Verfahren zur Gewinnung eines metallhaltigen Sekundärrohstoffs aus einem Aufbereitungsgut nach Anspruch 1und die Verwendung eines mineralhaltigen Materials zur Gewinnung eines metallhaltigen Sekundärrohstoffs aus einem Aufbereitungsgut nach Anspruch 11 gelöst.

Die vorliegende Erfindung betrifft ein Verfahren zur Gewinnung mindestens eines metallhaltigen Sekundärrohstoffs, der ein Metall der Seltenen Erden, ein Edelmetall oder ein selten oder in geringen Konzentrationen vorkommendes Metallenthält oder daraus besteht, aus einem Aufbereitungsgut. Selten oder in geringen Konzentrationen vorkommende Metalle werden nachfolgend auch als Sondermetalle bezeichnet. Das Aufbereitungsgut kann dabei Elektroschrott und/oder Abfallprodukte eines metallurgischen Verfahrens umfassen. Gemäß dem erfindungsgemäßen Verfahren wird ein den metallhaltigen Sekundärrohstoff enthaltendes Gemisch, das auf Grundlage des Aufbereitungsguts gebildet ist, bereitgestellt, ein mineralhaltiges Material und das den metallhaltigen Sekundärrohstoff enthaltende Gemisch zusammengebracht, um den metallhaltigen Sekundärrohstoff an das mineralhaltige Material zu adsorbieren, und eine Desorptionslösung und das mineralhaltige Material einschließlich des adsorbierten metallhaltigen Sekundärrohstoffs zusammengebracht, um den metallhaltigen Sekundärrohstoff von dem mineralhaltigen Material zu desorbieren.

Das erfindungsgemäße Verfahren ermöglicht eine Reduzierung der Zahl der in bisher bekannten Recyclingverfahren durchzuführenden Verfahrensschritte, eine Steigerung der Effizienz bei der Rückgewinnung von Metallen der Seltenen Erden, von Edelmetallen und von Sondermetallen und eine Verbesserung der Umweltverträglichkeit, da weniger und weniger umweltschädliche und risikoreiche Chemikalien einsetzbar sind und das mineralhaltige Material und gegebenenfalls einige Chemikalien mehrfach verwendet werden können.

Das mineralhaltige Material ist eine gewöhnliche, natürliche Tonmischung, ein synthetisches Tonmineral, ein Mineral der Zeolithgruppe und/oder ein Mineral der Hydrargillit-Diaspor-Gruppe oder enthält ein solches. Die gewöhnliche, natürliche Tonmischung kann ein aufbereiteter Ton sein, beispielsweise ein kaolinitischer oder halloysitischer Tonmineral-Rohstoff (Zweischicht-Tonmineral) oder ein smektitischer oder vermiculitischer Tonmineral-Rohstoff (Dreischicht-Tonmineral). Zum Beispiel kann das mineralhaltige Material Westerwälder Ton, Oberpfälzer Kaolin , Bayerischer oder Friedländer Bentonit oder Südafrikanischer oder Australischer Vermiculit sein. Das synthetische Tonmineral kann z.B. Laponit sein, das Mineral der Zeolithgruppe kann beispielsweise Faujasit, Mordenit oder Erionit sein und das Mineral der Hydrargillit-Diaspor-Gruppe kann beispielsweise Bayerit, Böhmit, Gibbsit oder Diaspor sein. Die genannten Minerale liegen vorzugsweise in angereicherter Form vor. Das mineralhaltige Material kann auch eine Mischung sein, die eine oder mehrere natürliche Tonmischungen, ein oder mehrere synthetische Tonminerale, ein oder mehrere Minerale der Zeolithgruppe und/oder ein oder mehrere Minerale der Hydrargillit-Diaspor-Gruppe enthält.

Natürliche Tonmischungen, synthetische Tonminerale sowie die Minerale der Zeolithgruppe und der Hydrargillit-Diaspor-Gruppe besitzen besondere Adsorptions- und Austauschkapazitäten. Insbesondere sind sie in der Lage, aufgrund ihrer Schicht- oder Käfigstruktur, ihrer großen, zugänglichen Oberfläche und ihrer negativen Ladung, Kationen zu adsorbieren. Diese Adsorptions- und Austauschkapazitäten können in dem erfindungsgemäßen Verfahren für eine selektive Anreicherung des Metalls der Seltenen Erden, des Edelmetalls bzw. des Sondermetalls an der Oberfläche der Adsorbentien und einer Abreicherung in der jeweiligen Sekundärrohstofflösung ausgenutzt werden. Durch die Ausnutzung der Trennwirkung natürlicher bzw. synthetischer mineralischer Rohstoffe wie den oben genannten mineralhaltigen Materialien, kann die Notwendigkeit des Einsatzes von umweltproblematischen Chemikalien reduziert werden.

Das mineralhaltige Material liegt als Schlicker oder als Schüttgut in Form von Pellets oder Granulat vor. Unter Schlicker ist eine Suspension aus Wasser und Mineralien, beispielsweise Tonmineralien, zu verstehen. Das Schüttgut kann in Form von Pellets oder Granulat mit Durchmessern im Bereich von 5 mm bis 50 mm, idealerweise im Bereich von 10 mm bis 30 mm, vorliegen. Die Pellets bzw. Granulate können über die klassischen Verfahren, z.B. der Wirbelschichtgranulation und der Extrusion hergestellt werden.

Das mineralhaltige Material kann vorbehandelt sein, beispielsweise chemisch und/oder mechanisch. Zum Beispiel kann eine Fraktionierung und/oder eine Funktionalisierung des mineralhaltigen Materials durchgeführt werden. Verfahren für die Fraktionierung können klassisch-mechanische Sieb- und/oder Sichtungsverfahren zur Abreicherung geringer adsorptiver Minerale bei gleichzeitiger Anreicherung hochadsorptiver Minerale sein. Mit der gleichen Zielsetzung erfolgen Mineraltrennungen auf chemischem Wege wie dem Flotationsverfahren. Die chemische Funktionalisierung kann über Säurebehandlungen mit dem Ergebnis erfolgen, dass gering adsorptive Minerale und/oder Störelemente wie Eisen entfernt und gleichzeitig die für die benötigte Adsorption erforderliche spezifische Oberfläche der Tonminerale signifikant erhöht wird (analog der Herstellung von Bleicherden).

Die Erscheinungsform des mineralhaltigen Materials und/oder dessen Vorbehandlung können die Adsorptions- bzw. Austauscheigenschaften des mineralhaltigen Materials sowie die Wahl der für das Verfahren zur Gewinnung des metallhaltigen Sekundärrohstoffs benötigten Chemikalien insbesondere bezüglich deren Konzentration und Menge beeinflussen. Beispielsweise kann ein geeignet vorbehandeltes mineralhaltiges Material verbesserte Adsorptionseigenschaften haben und so die Durchführung des Verfahrens mit einem geringeren Einsatz an Chemikalien erlauben.

Das Aufbereitungsgut kann Elektro- und/oder Elektronikschrott, Abfallprodukte eines Aufarbeitungsprozesses, Abfallprodukte eines metallurgischen Verfahrens und/oder metallhaltige Industrieabfälle enthalten oder daraus bestehen. Elektro- und/oder Elektronikschrott kann beispielsweise Elektromotoren, Leuchtmittel, Magnete, Batterien, Leiterplatten und/oder andere elektronische Bauteile enthalten. Die einzelnen Komponenten des Elektro- und/oder Elektronikschrotts können beliebig gemischt sein und eine Sortenreinheit ist verzichtbar. Auch kann eine Mindestkonzentration des metallhaltigen Sekundärrohstoffs sehr gering sein und/oder beliebig variieren. Beispielsweise kann 1 kg Elektroschrott ca. 1 mg bis 1 g oder mehr des metallischen Sekundärrohstoffs enthalten. Abfallprodukte eines Aufarbeitungsprozesses können zum Beispiel Stoffströme, insbesondere Stäube und Schlacken, aus der metallurgischen Aufbereitung von Elektro- und/oder Elektronikschrott, Fraktionen bzw. Stoffgemische aus verschiedenen Stufen mechanischer Aufbereitungsverfahren von Elektro- und/oder Elektronikschrott, Säuren und/oder alkalische Lösungen aus chemischen Aufbereitungsverfahren von Elektro- und/oder Elektronikschrott und/oder Filterstäube, z.B. aus Müllverbrennungsanlagen oder anderen Aufbereitungsanlagen, sein oder solche enthalten. Abfallprodukte eines metallurgischen Verfahren können beispielsweise Abfallprodukte der Aufbereitung von Roherzen und Metallkonzentraten, Säuren und/oder alkalische Lösungen aus der Rohstoff- und/oder Erzaufbereitung, Filterstäube aus der Rohstoff- und/oder Erzaufbereitung, Schlacken aus der metallurgischen Aufbereitung von Rohstoffen und Erzen, z.B. Rotschlämme aus der Bauxitaufbereitung zur Aluminiumoxidgewinnung, und/oder Schlämme aus Elektrolyseverfahren, beispielsweise Anodenschlämme der Aluminium- und/oder Kupfer-Raffination, sein oder solche enthalten.

Aufgrund der Vielfalt an möglichen Aufbereitungsgütern kann das erfindungsgemäße Verfahren zur Gewinnung des metallhaltigen Sekundärrohstoffs vielseitig angewendet werden. Insbesondere ermöglicht das Verfahren die Rückgewinnung von Metallen der Seltenen Erden, Edelmetallen bzw. Sondermetallen aus bisher im Wesentlichen ungenutzten Industrieabfällen, wie z.B. Elektroschrott. Alternativ oder zusätzlich kann das Verfahren in hydrometallurgische Verfahrensabläufe der Erzaufbereitung und des Reststoffrecyclings integriert werden.

Der metallhaltige Sekundärrohstoff enthält ein Metall der Seltenen Erden, insbesondere Scandium, Yttrium oder ein Lanthanoid, ein Edelmetall, insbesondere Gold, Silber, Platin oder ein Metall der Nickelgruppe, und/oder ein Sondermetall, insbesondere ein Metall oder Halbmetall der Bor-Gruppe, insbesondere Indium oder Gallium, oder ein Metall oder Halbmetall der Kohlenstoff-Gruppe, insbesondere Germanium, oder besteht daraus.

Das den metallhaltigen Sekundärrohstoff enthaltende Gemisch kann ein Gemisch aus festen und flüssigen Bestandteilen sein, beispielsweise eine Lösung oder eine Suspension. Es genügt eine geringe Konzentration des metallischen Sekundärrohstoffs bzw. mehrerer metallischer Sekundärrohstoffe in dem den metallhaltigen Sekundärrohstoff enthaltenden Gemisch. Beispielsweise kann das den metallhaltigen Sekundärrohstoff enthaltende Gemisch eine Konzentration an metallhaltigem Sekundärrohstoff von 10⁻⁶ bis 10⁻³ mol in 1 Liter des Gemischs aufweisen.

Die Desorptionslösung kann eine Säure sein oder eine Säure enthalten. Zum Beispiel kann die Desorptionslösung einen pH-Wert im Bereich zwischen pH 5 und pH 7, insbesondere zwischen pH 5,5 und pH 6,5, aufweisen. Beispielsweise kann die Desorptionslösung Schwefelsäure, Salzsäure, Salpetersäure oder eine Säure auf Basis nachwachsender Rohstoffe, zum Beispiel Essigsäure oder Propionsäure, sein oder eine solche enthalten. Alternativ kann die Desorptionslösung eine verdünnte Säure, beispielsweise eine verdünnte Schwefelsäure, eine verdünnte Salzsäure oder eine verdünnte Säure auf Basis nachwachsender Rohstoffe, sein oder enthalten. Die reine oder verdünnte Säure kann an den zu gewinnenden metallhaltigen Sekundärrohstoff angepasst sein. Insbesondere kann der pH-Wert der Säure so gewählt sein, dass der zu gewinnende metallhaltige Sekundärrohstoff von dem mineralhaltigen Material desorbiert. Durch die Verwendung einer verdünnten Säure als Desorptionslösung entstehen bei der Gewinnung des metallhaltigen Sekundärrohstoffs keine humantoxikologischen Nebenprodukte und die Umweltbelastung wird verringert.

Das erfindungsgemäße Verfahren zur Gewinnung eines metallhaltigen Sekundärrohstoffs aus einem Aufbereitungsgut umfasst, wie oben bereits erwähnt, das Bereitstellen eines den metallhaltigen Sekundärrohstoff enthaltenden Gemischs, insbesondere einer den metallhaltigen Sekundärrohstoff enthaltenden Lösung. Nachfolgend wird das Bereitstellen des den metallhaltigen Sekundärrohstoff enthaltenden Gemischs ausgehend von einem Aufbereitungsgut, das nicht als Suspension vorliegt, beispielsweise ausgehend von Elektro- und/oder Elektronikschrott, beispielhaft dargestellt.

Zum Bereitstellen des den metallhaltigen Sekundärrohstoff enthaltenden Gemischs wird das Aufbereitungsgut zerkleinert. Zum Beispiel kann das Aufbereitungsgut geschreddert, zermahlen und/oder granuliert werden. Der Zerkleinerungsprozess kann ein mehrstufiger Prozess sein, wobei zunächst in einem oder mehreren Schritten eine grobe Zerkleinerung des Aufbereitungsgutes erfolgt und in einem oder mehreren nachfolgenden Schritten eine feine Zerkleinerung erfolgt.

Zum Bereitstellen des den metallhaltigen Sekundärrohstoff enthaltenden Gemischs werden vorgegebene Bestandteile aus dem zerkleinerten Aufbereitungsgut separiert. Beispielsweise können Kunststoffe, Verbundstoffe, ferromagnetische Metalle wie beispielsweise Stahl, Eisen, Nickel und/oder andere ferromagnetische Metalle, und/oder nichtferromagnetische Metalle wie beispielsweise Kupfer, Zink, Aluminium und/oder andere nichtferromagnetische Metalle separiert werden. Das Separieren kann beispielsweise durch eine Magnetscheidung, eine Wirbelstromscheidung und/oder eine Dichtetrennung erfolgen. Vorzugsweise ist das Separieren ein mehrstufiger Prozess, wobei in einem oder mehreren Schritten eine Magnet- oder Wirbelstromtrennung durchgeführt wird und in einem oder mehreren Schritten eine Dichtetrennung durchgeführt wird.

Zum Bereitstellen des den metallhaltigen Sekundärrohstoff enthaltenden Gemischs wird weiterhin das verbliebene zerkleinerte Aufbereitungsgut, das nunmehr im Wesentlichen von den vorgegebenen Bestandteilen wie beispielsweise Kunststoffen, Verbundstoffen und vorgegebenen Metallen befreit ist, aufbereitet. Dazu kann das verbliebene zerkleinerte Aufbereitungsgut zum Beispiel mit einer Aufbereitungslösung vermischt werden, um einen Anteil des verbliebenen zerkleinerten Aufbereitungsguts aufzulösen. Die Aufbereitungslösung kann beispielsweise eine Säure oder eine verdünnte Säure sein oder eine solche enthalten. Die reine oder verdünnte Säure kann an den zu gewinnenden metallhaltigen Sekundärrohstoff angepasst sein. Insbesondere kann der pH-Wert der Säure so gewählt sein, dass der zu gewinnende metallhaltige Sekundärrohstoff durch die Aufbereitungslösung gelöst wird. Beispielsweise kann der pH-Wert pH 5 bis pH 7 betragen, idealerweise liegt er zwischen pH 5,5 und pH 6,5. Beispielsweise kann die Desorptionslösung eine reine oder verdünnte Schwefelsäure, eine reine oder verdünnte Salzsäure oder eine reine oder verdünnte Säure auf Basis nachwachsender Rohstoffe sein oder eine solche enthalten. Durch die Verwendung einer verdünnten Säure kann das Umweltrisiko bei der Gewinnung des metallischen Sekundärrohstoffs reduziert werden.

Zum Bereitstellen des den metallhaltigen Sekundärrohstoff enthaltenden Gemischs wird außerdem das den metallhaltigen Sekundärrohstoff enthaltende Gemisch aus dem aufbereiteten verbliebenen zerkleinerten Aufbereitungsgut abgetrennt. Beispielsweise werden unlösliche und/oder schwerlösliche Stoffe, beispielsweise Metalle wie Kupfer, schwerlösliche Salze, wie beispielsweise Sulfate und/oder Oxide, beispielsweise keramische Materialien, durch Filtration und/oder Zentrifugation von dem aufbereiteten Aufbereitungsgut abgetrennt. Insbesondere werden Metalle mit dreiwertigen Kationen wie beispielsweise Al³⁺ und Fe³⁺ abgetrennt oder zumindest abgereichert, da diese eine Anlagerung des metallhaltigen Sekundärrohstoffs an das mineralhaltige Mineral, beispielsweise das Tonmineral oder das tonmineralhaltige Material, stören können. Das verbleibende Filtrat stellt dann das den metallhaltigen Sekundärrohstoff enthaltende Gemisch dar.

Ausgehend von einem Aufbereitungsgut, das als Suspension vorliegt, beispielsweise ausgehend von einer Schlacke, kann zum Bereitstellen des den metallhaltigen Sekundärrohstoff enthaltenden Gemischs das Aufbereitungsgut beispielsweise mit einer Ausbereitungslösung aufbereitet und das den metallhaltigen Sekundärrohstoff enthaltende Gemisch aus der aufbereiteten Aufbereitungsgut abgetrennt werden. Das Aufbereiten und Abtrennen kann wie oben hinsichtlich des verbliebenen zerkleinerten Aufbereitungsguts beschrieben, erfolgen.

Das erfindungsgemäße Verfahren zur Gewinnung eines metallhaltigen Sekundärrohstoffs aus einem Aufbereitungsgut umfasst, wie oben bereits erwähnt, das Zusammenbringen des mineralhaltigen Materials und des den metallhaltigen Sekundärrohstoff enthaltenden Gemischs. Das Zusammenbringen kann auf Grundlage verschiedener Prozesse erfolgen, beispielsweise mittels eines Batchverfahrens oder mittels eines Säulenverfahrens.

Beim Batchverfahren werden das mineralhaltige Material und das den metallhaltigen Sekundärrohstoff enthaltende Gemisch miteinander vermischt. Nach dem Vermischen adsorbiert der metallhaltige Sekundärrohstoff an das mineralhaltige Material. Nach einer vorgegebenen Zeit, nach der der Adsorptionsprozess abgeschlossen ist, d.h. ein Großteil der Ionen des metallhaltigen Sekundärrohstoffs an das mineralhaltige Material adsorbiert ist, beispielsweise nach ca. 2 Stunden, wird das mineralhaltige Material einschließlich des adsorbierten metallhaltigen Sekundärrohstoffs aus der Mischung aus mineralhaltigem Material und den metallhaltigen Sekundärrohstoff enthaltendem Gemisch getrennt. Zum Trennen kann beispielsweise ein Filterverfahren und/oder eine Zentrifugation genutzt werden.

Beim Säulenverfahren wird das den metallhaltigen Sekundärrohstoff enthaltende Gemisch über das mineralhaltige Material geleitet. Beispielsweise befindet sich das mineralhaltige Material in einem Durchflussgefäß und das den metallhaltigen Sekundärrohstoff enthaltende Gemisch fließt mit geringer Flussgeschwindigkeit durch das Durchflussgefäß. Die Flussgeschwindigkeit ist zum Beispiel derart gewählt, dass das den metallhaltigen Sekundärrohstoff enthaltende Gemisch ca. 2 Stunden mit dem mineralhaltigen Material in Kontakt ist. Während das den metallhaltigen Sekundärrohstoff enthaltende Gemisch über das mineralhaltige Material geleitet wird, adsorbiert der metallhaltige Sekundärrohstoff an das mineralhaltige Material.

Das erfindungsgemäße Verfahren zur Gewinnung eines metallhaltigen Sekundärrohstoffs aus einem Aufbereitungsgut umfasst, wie oben bereits erwähnt, das Zusammenbringen des mineralhaltigen Materials einschließlich des adsorbierten metallhaltigen Sekundärrohstoffs und der Desorptionslösung. Das Zusammenbringen kann auf Grundlage verschiedener Prozesse erfolgen, beispielsweise mittels eines weiteren Batchverfahrens oder mittels eines weiteren Säulenverfahrens.

Bei dem weiteren Batchverfahren werden das mineralhaltige Material einschließlich des metallhaltigen Sekundärrohstoffs und die Desorptionslösung vermischt. Nach dem Vermischen desorbiert der metallhaltige Sekundärrohstoff von dem mineralhaltigen Material und verbleibt in gelöster Form in der Desorptionslösung. Nach einer vorgegebenen Zeit, nach der der Desorptionsprozess abgeschlossen ist, d.h. ein Großteil der Ionen des metallhaltigen Sekundärrohstoffs von dem mineralhaltigen Gemisch desorbiert ist, beispielsweise nach ca. 2 Stunden, wird die Desorptionslösung einschließlich des metallhaltigen Sekundärrohstoffs von dem mineralhaltigen Material getrennt. Das Trennen kann beispielsweise durch Filterung und/oder Zentrifugation erfolgen.

Bei dem weiteren Säulenverfahren wird die Desorptionslösung über das mineralhaltige Material einschließlich des adsorbierten metallhaltigen Sekundärrohstoffs geleitet. Beispielsweise befindet sich das mineralhaltige Material in einem Durchflussgefäß und die Desorptionslösung fließt mit geringer Flussgeschwindigkeit durch das Durchflussgefäß. Die Flussgeschwindigkeit ist zum Beispiel derart gewählt, dass das den metallhaltigen Sekundärrohstoff enthaltende Gemisch ca. 2 Stunden mit dem mineralhaltigen Material in Kontakt ist. Während die Desorptionslösung über das mineralhaltige Material geleitet wird, desorbiert der metallhaltige Sekundärrohstoff von dem mineralhaltigen Material und verbleibt in der Desorptionslösung.

Das mineralhaltige Material kann, nachdem der metallhaltige Sekundärrohstoff desorbiert ist, wiederverwendet werden.

Das Aufbereitungsgut kann zwei oder mehrere metallhaltige Sekundärrohstoffe enthalten. Das aus dem Aufbereitungsgut gebildete Gemisch enthält dann zwei oder mehrere metallhaltige Sekundärrohstoffe, die beim Zusammenbringen des Gemischs mit dem mineralhaltigen Material an das mineralhaltige Material adsorbieren. Unter diesen Umständen erfolgt das Zusammenbringen der Desorptionslösung und des mineralhaltigen Materials einschließlich des metallhaltigen Sekundärrohstoffs mehrstufig. Dabei wird zunächst das mineralhaltige Material einschließlich der zwei oder der mehreren metallhaltigen Sekundärrohstoffe und eine erste Desorptionslösung mit einem ersten pH-Wert zusammengebracht. Das Zusammenbringen kann wie oben ausführlich beschrieben erfolgen. Durch das Zusammenbringen wird ein erster der metallhaltigen Sekundärrohstoffe von dem mineralhaltigen Material desorbiert und verbleibt in gelöster Form in der ersten Desorptionslösung.

Anschließend wird das mineralhaltige Material einschließlich der verbliebenen an dem mineralhaltigen Material adsorbierten metallhaltigen Sekundärrohstoffe und eine zweite Desorptionslösung mit einem zweiten pH-Wert zusammengebracht, wobei sich der erste pH-Wert von dem zweiten pH-Wert unterscheidet. Das Zusammenbringen kann wie oben ausführlich beschrieben erfolgen. Durch das Zusammenbringen wird ein zweiter metallhaltiger Sekundärrohstoff desorbiert und verbleibt in gelöster Form in der ersten Desorptionslösung.

Für die verbliebenen metallhaltigen Sekundärrohstoffe kann entsprechend mit weiteren Desorptionslösungen verfahren werden.

Vorzugsweise ist der erste pH-Wert größer als der zweite pH-Wert sowie gegebenenfalls die weiteren pH-Werte. Dann desorbiert als erstes metallhaltiges Sekundärmetall ein Metall, dessen Adsorptionskapazität geringer ist als das der übrigen an dem mineralhaltigen Material adsorbierten metallhaltigen Sekundärmetalle, beispielsweise ein leichtes Metall der Seltenen Erden, wie zum Beispiel Neodym. Als zweites metallhaltiges Sekundärmetall desorbiert dann ein Metall, dessen Adsorptionskapazität größer als das des ersten metallhaltigen Sekundärmetalls und gegebenenfalls geringer ist als das der übrigen an dem mineralhaltigen Material adsorbierten metallhaltigen Sekundärmetalle, beispielsweise ein schweres Metall der Seltenen Erden, wie zum Beispiel Yttrium.

Entsprechend ist der zweite pH-Wert geringer als der erste pH-Wert und gegebenenfalls größer als die weiteren pH-Werte.

Durch die getrennte Desorption unterschiedlicher metallhaltiger Materialien können unterschiedliche metallhaltige Sekundärrohstoffe schnell und effektiv gewonnen werden. Die Umweltbelastungen sind durch die Nutzung verdünnter, gegebenenfalls organischer Säuren reduziert.

Zum Gewinnen des metallhaltigen Sekundärrohstoffs aus dem Aufbereitungsgut bzw. aus der Desorptionslösung kann der metallhaltige Sekundärrohstoff aus der den metallhaltigen Sekundärrohstoff enthaltenden Desorptionslösung als Oxalat des metallhaltigen Sekundärrohstoffs ausgefällt werden und das erhaltene Oxalat des metallhaltigen Sekundärrohstoffs geglüht werden, um ein Oxid des metallhaltigen Sekundärrohstoffs zu bilden.

Alternativ kann der metallhaltige Sekundärrohstoff durch Zentrifugation oder mit Hilfe eines Filters, beispielsweise einer Kammerfilterpresse, von der Desorptionslösung getrennt und gegebenenfalls weiter bearbeitet werden. Die Desorptionslösung kann dann wiederverwendet werden, wodurch die Restprodukte des Verfahrens reduziert werden.

Das erfindungsgemäße Verfahren kann in bekannte Verfahren zum Recyceln von Elektroschrott integriert werden.

Eine Anlage, die dazu ausgebildet ist, ein Verfahren zum Gewinnen eines metallischen Sekundärrohstoffs aus einem Aufbereitungsgut, wie es in den voranstehenden Absätzen beschrieben wird, auszuführen, enthält vorzugsweise eine Bereitstellungseinrichtung und eine Adsorptions- und Desorptionseinrichtung. Die Bereitstellungseinrichtung kann Schredder, Mahlwerke, Trennvorrichtungen, insbesondere Magnetscheider, Dichtescheider, Filter und/oder Zentrifugen, und/oder verschiedene Behälter umfassen. Die Adsorptions- und Desorptionseinrichtung kann einen oder mehrere Behälter und eine Trennvorrichtung oder einen Durchflussbehälter enthalten.

Die vorliegende Erfindung betrifft eine Verwendung eines mineralhaltigen Materials, das eine natürliche Tonmischung, ein synthetisches Tonmineral, ein Mineral der Zeolithgruppe und/oder ein Mineral der Hydrargillit-Diaspor-Gruppe enthält oder daraus besteht, zum Gewinnen eines metallischen Sekundärrohstoffs aus einem Aufbereitungsgut, wobei der metallhaltige Sekundärrohstoff ein Metall der Seltenen Erden, ein Edelmetall, ein Metall der Nickelgruppe, ein Metall oder Halbmetall der Bor-Gruppe oder ein Metall oder Halbmetall der Kohlenstoff-Gruppe enthält oder daraus besteht, wobei das mineralhaltige Material in Form von Schlicker, Pellets oder Granulat dazu geeignet ist, den Sekundärrohstoff aus einem den metallhaltigen Sekundärrohstoff enthaltenden Gemisch zu adsorbieren und den metallhaltigen Sekundärrohstoff von dem mineralhaltigen Material in eine Desorptionslösung zu desorbieren. Das mineralhaltige Material kann eines der oben genannten Materialien enthalten oder daraus bestehen. Die Verwendung des mineralhaltigen Materials erfolgt vorzugsweise gemäß dem oben beschriebenen Verfahren.

Weitere Aspekte und Merkmale der vorliegenden Erfindung ergeben sich aus den abhängigen Ansprüchen, den beigefügten Zeichnungen und der nachfolgenden Beschreibung bevorzugter Ausführungsformen.

### KURZBESCHREIBUNG DER ZEICHNUNGEN

Ausführungsformen der Erfindung werden nun beispielhaft und unter Bezugnahme auf die beigefügten Zeichnungen beschreiben. Es zeigen:
- Fig. 1: eine schematische Darstellung einer Anlage zur Gewinnung von Metallen der Seltenen Erden aus Elektroschrott;
- Fig. 2: eine schematische Darstellung einer Bereitstellungseinrichtung zum Bereitstellen einer Metalle der Seltenen Erden enthaltenden Lösung;
- Fig. 3: ein Flussdiagramm eines Verfahrens zur Gewinnung von Metallen der Seltenen Erden aus Elektroschrott; und
- Fig. 4: ein Flussdiagramm eines Verfahrens zum Bereitstellen einer Metalle der Seltenen Erden enthaltenden Lösung.

### BESCHREIBUNG VON AUSFÜHRUNGSFORMEN

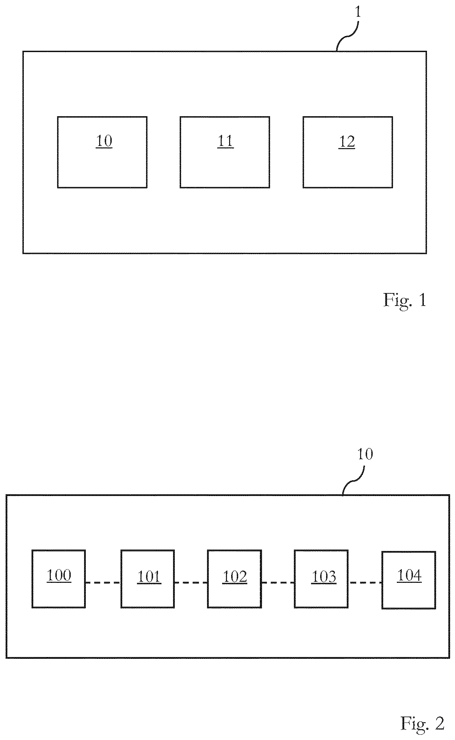

Fig. 1 zeigt eine schematische Darstellung einer Anlage 1 zur Gewinnung von Metallen der Seltenen Erden aus Elektroschrott. Die Anlage 1 umfasst eine Bereitstellungseinrichtung 10, eine Adsorptions- und Desorptionseinrichtung 11 und eine Weiterverarbeitungseinrichtung 12.

Die Bereitstellungsvorrichtung 10 zum Bereitstellen einer Metalle der Seltenen Erden enthaltenden Lösung, die aus Elektroschrot gebildet ist, umfasst, wie in Fig. 2 gezeigt, eine Anlieferzone 100 zum Anliefern von Elektroschrott, ein Zerkleinerungssystem 101 zum Zerkleinern des angelieferten Elektroschrotts, ein Separationssystem 102 zum Separieren von Kunststoffen und bestimmten Metallen wie Stahl, Eisen, Nickel, Kupfer, Zink und Aluminium aus dem zerkleinerten Elektroschrott, eine Löseeinrichtung 103 zum Auflösen des verbliebenen zerkleinerten Elektroschrotts und ein Trennsystem 104 zum Abtrennen unlöslicher und schwerlöslicher Stoffe aus dem aufgelösten Elektroschrott und zum Ausgeben der Metalle der Seltenen Erden enthaltenden Lösung. Das Zerkleinerungssystem 101 enthält einen Schredder und ein Mahlwerk, das Separationssystem 102 enthält einen Dichtescheider und einen Magnetscheider, die Löseeinrichtung 103 umfasst einen Mischbehälter und das Trennsystem 104 umfasst einen Filter. Die einzelnen Komponenten der Bereitstellungseinrichtung 10 sind über Fördereinrichtungen bzw. Greifeinrichtungen mit jeweils benachbarten Komponenten verbunden wie durch die gestrichelten Verbindungslinien in Fig. 2 angedeutet ist.

Die Adsorptions- und Desorptionseinrichtung 11 ist als Durchflussbehälter ausgebildet, in dem ein Tongranulat angeordnet ist und durch den nacheinander die Metalle der Seltenen Erden enthaltende Lösung und eine Desorptionslösung geleitet werden kann. Die Weiterverarbeitungseinrichtung 12 umfasst ein Behältersystem zum Ausfällen von Oxalaten der Metalle der Seltenen Erden aus der Desorptionssäure nach Durchfließen des Durchflussbehälters und ein Heizsystem zum Glühen der Oxalate der Metalle der Seltenen Erden zu Oxiden dieser.

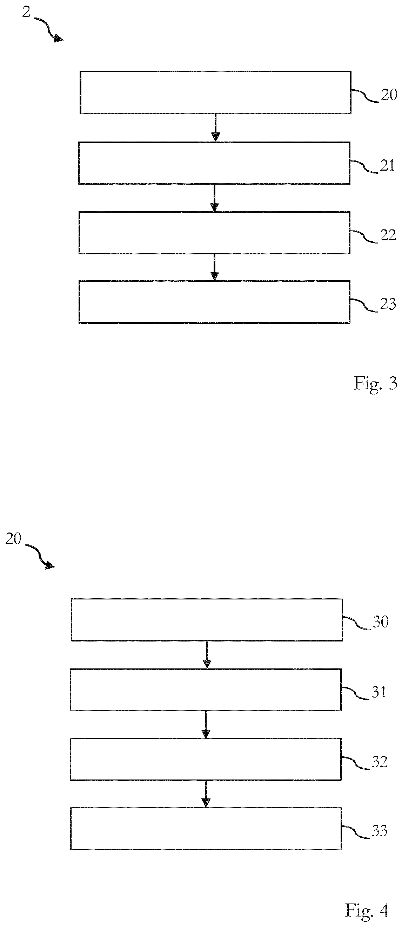

Fig. 3 zeigt ein Flussdiagramm eines Verfahrens 2 zur Gewinnung von Metallen der Seltenen Erden aus einem Aufbereitungsgut mittels der Anlage 1.

Bei 20 wird in der Bereitstellungseinrichtung 10 der Anlage 1 eine Metalle der Seltenen Erden enthaltende Lösung bereitgestellt, die auf Grundlage des Aufbereitungsguts gebildet ist. Das Bereitstellen der Metalle der Seltenen Erden enthaltenden Lösung wird mit Bezug auf Fig. 4 weiter unten beschrieben.

Bei 21 wird ein Tongranulat und die Metalle der seltenen Erden enthaltende Lösung zusammengebracht, indem die Metalle der seltenen Erden enthaltende Lösung mit geringer Flussgeschwindigkeit durch den mit dem Tongranulat gefüllten Durchflussbehälter geleitet wird. Dabei adsorbieren die Metalle der Seltenen Erden an das Tongranulat.

Bei 22 werden die Metalle der Seltenen Erden von dem Ton-/Mineralgranulat getrennt desorbiert. Dazu wird eine Essigsäure enthaltende Desorptionslösung mit einem pH-Wert 6,5 und das Tongranulat einschließlich der adsorbierten Metalle der Seltenen Erden zusammengebracht, indem die Desorptionslösung durch den Durchflussbehälter, der mit dem Tongranulat einschließlich der adsorbierten Metalle der Seltenen Erden gefüllt ist, geleitet wird. Dadurch desorbieren leichte Metalle der Seltenen Erden wie Lanthan und Neodym von dem Tongranulat. Anschließend wird eine Essigsäure enthaltende Desorptionslösung mit einem pH-Wert 5,5 und das Tongranulat einschließlich der verbliebene adsorbierten Metalle der Seltenen Erden zusammengebracht, indem die Desorptionslösung durch den Durchflussbehälter, der mit dem Tongranulat einschließlich der verbliebenen adsorbierten Metalle der Seltenen Erden gefüllt ist, geleitet wird. Dadurch desorbieren schwere Metalle der Seltenen Erden wie Yttrium von dem Tongranulat.

Bei 23 werden in der Weiterverarbeitungseinrichtung 12 die Metalle der Seltenen Erden aus den Desorptionslösungen durch Zugabe von Oxalsäure oder Salzen der Oxalsäure als Oxalate ausgefällt und die Oxalate geglüht, um ein Oxid der Metalle der Seltenen Erden zu bilden. Es werden also die desorbierten leichten Metalle der Seltenen Erden aus der Essigsäure einschließlich der desorbierten leichten Metalle der Seltenen Erden als Oxalate ausgefällt und diese durch Glühen in die Oxide überführt. Ebenso werden die desorbierten schweren Metalle der Seltenen Erden aus der Essigsäure einschließlich der desorbierten schweren Metalle der Seltenen Erden als Oxalate ausgefällt und diese durch Glühen in die Oxide überführt.

Fig. 4 zeigt ein Verfahren 10 zum Bereitstellen der Metalle der Seltenen Erden enthaltende Lösung.

Bei 30 wird Elektroschrott, der von der Anlieferzone 100 dem Zerkleinerungssystem 101 zugeführt wird, in dem Zerkleinerungssystem 101 zerkleinert. Dabei wird der Elektroschrott in dem Schredder des Zerkleinerungssystems 101 geschreddert und in dem Mahlwerk des Zerkleinerungssystems 101 gemahlen.

Bei 31 werden Kunststoffe und bestimmte Metalle wie Stahl, Eisen, Nickel, Kupfer, Zink und Aluminium in der Separationseinrichtung 102 aus dem zerkleinerten Elektroschrott abgetrennt. Dazu wird in dem Dichtescheider der Separationseinrichtung 102 Kunststoff aus dem zerkleinerten Elektroschrott entfernt und in dem Magnetscheider der Separationseinrichtung werden Metalle aus dem zerkleinerten Elektroschrott entfernt.

Bei 32 wird der verbliebene zerkleinerte Elektroschrott aufbereitet. Dazu wird der verbliebene zerkleinerte Elektroschrott in der Löseeinrichtung 103 mit einer Säure gemischt, um den verbliebenen zerkleinerten Elektroschrott aufzulösen.

Bei 33 wird in dem Trennsystem 104 die Metalle der Seltenen Erden enthaltende Lösung aus dem aufbereiteten verbliebenen zerkleinerten Elektroschrott abgetrennt.

## Patentansprüche

1. Verfahren zur Gewinnung eines Sekundärrohstoffs aus einem Aufbereitungsgut, wobei der Sekundärrohstoff ein Metall der Seltenen Erden, ein Edelmetall, ein Metall der Nickelgruppe, ein Metall oder Halbmetall der Bor-Gruppe oder ein Metall oder Halbmetall der Kohlenstoff-Gruppe enthält oder daraus besteht, umfassend:
Bereitstellen (20) eines den Sekundärrohstoff enthaltenden Gemischs, das auf Grundlage des Aufbereitungsguts gebildet ist;
Zusammenbringen (21) eines mineralhaltigen Materials in Form von Schlicker, Pellets oder Granulat und des den Sekundärrohstoff enthaltenden Gemischs, um den Sekundärrohstoff an das mineralhaltige Material zu adsorbieren, wobei das mineralhaltige Material eine natürliche Tonmischung, ein synthetisches Tonmineral, ein Mineral der Zeolithgruppe und/oder ein Mineral der Hydrargillit-Diaspor-Gruppe enthält oder daraus besteht;
Zusammenbringen (22) einer Desorptionslösung, die eine reine oder verdünnte Säure ist oder enthält, und des mineralhaltigen Materials einschließlich des adsorbierten Sekundärrohstoffs, um den Sekundärrohstoff von dem mineralhaltigen Material zu desorbieren,
wobei zwei Sekundärrohstoffe an dem mineralhaltigen Material adsorbiert sind, und wobei das Zusammenbringen (22) einer Desorptionslösung und des mineralhaltigen Materials einschließlich des adsorbierten Sekundärrohstoffs umfasst:
Zusammenbringen des mineralhaltigen Materials und einer ersten Desorptionslösung mit einem ersten pH-Wert, um den ersten der Sekundärrohstoffe zu desorbieren; und
Zusammenbringen des mineralhaltigen Materials und einer zweiten Desorptionslösung mit einem zweiten pH-Wert, um den zweiten der Sekundärrohstoffe zu desorbieren,
wobei sich der erste pH-Wert von dem zweiten pH-Wert unterscheidet.

2. Verfahren nach Anspruch 1, wobei die natürliche Tonmischung ein Westerwälder Ton, ein Oberpfälzer Kaolin oder ein smektitischer oder vermiculitischen Rohstoff ist, das synthetische Tonmineral Laponit ist, das Mineral der Zeolithgruppe Faujasit, Mordenit oder Erionit ist und/oder das Mineral der Hydrargillit-Diaspor-Gruppe Bayerit, Böhmit, Gibbsit oder Diaspor ist.

3. Verfahren nach Anspruch 1 oder 2, wobei das Aufbereitungsgut Elektro- und/ oder Elektronikschrott, Abfallprodukte eines Aufarbeitungsprozesses, Abfallprodukte eines metallurgischen Verfahrens und/oder metallhaltige Industrieabfälle enthält oder daraus besteht.

4. Verfahren nach einem der Ansprüche 1 bis 3, wobei das Metall der Seltenen Erden Scandium, Yttrium oder ein Lanthanoid ist, das Edelmetall Gold, Silber, Platin oder ein Metall der Nickelgruppe ist, das Metall oder Halbmetall der Bor-Gruppe Indium oder Gallium ist, oder das Metall oder Halbmetall der Kohlenstoff-Gruppe Germanium ist.

5. Verfahren nach einem der Ansprüche 1 bis 4, wobei das Bereitstellen (20) des den Sekundärrohstoff enthaltenden Gemischs umfasst:
Zerkleinern (30) des Aufbereitungsgutes, insbesondere Schreddern, Mahlen und/oder Granulieren des Aufbereitungsguts;
Separieren (31) von vorgegebenen Bestandteilen aus dem zerkleinerten Aufbereitungsgut;
Aufbereiten (32) des verbliebenen zerkleinerten Aufbereitungsguts; und
Abtrennen (33) des den Sekundärrohstoff enthaltenden Gemischs aus dem aufbereiteten verbliebenen zerkleinerten Aufbereitungsgut.

6. Verfahren nach einem der Ansprüche 1 bis 5, wobei das Zusammenbringen des mineralhaltigen Materials und des den Sekundärrohstoff enthaltenden Gemischs umfasst:
Mischen des mineralhaltigen Materials und des den Sekundärrohstoff enthaltenden Gemischs;
Trennen des mineralhaltigen Materials einschließlich des adsorbierten Sekundärrohstoffs nach einer vorgegebenen Zeit aus der Mischung aus mineralhaltigem Material und den Sekundärrohstoff enthaltendem Gemisch.

7. Verfahren nach einem der Ansprüche 1 bis 6, wobei das Zusammenbringen (21) des mineralhaltigen Materials und des den Sekundärrohstoff enthaltenden Gemischs umfasst:
Leiten des den Sekundärrohstoff enthaltenden Gemischs über das mineralhaltige Material.

8. Verfahren nach einem der Ansprüche 1 bis 7, wobei das Zusammenbringen des mineralhaltigen Materials einschließlich des adsorbierten Sekundärrohstoffs und der Desorptionslösung umfasst:
Mischen des mineralhaltigen Materials einschließlich des Sekundärrohstoffs und der Desorptionslösung;
Trennen der Desorptionslösung einschließlich des Sekundärrohstoffs nach einer vorgegebenen Zeit von dem mineralhaltigen Material.

9. Verfahren nach einem der Ansprüche 1 bis 8, wobei das Zusammenbringen (22) des mineralhaltigen Materials einschließlich des adsorbierten Sekundärrohstoffs und der Desorptionslösung umfasst:
Leiten der Desorptionslösung über das mineralhaltige Material einschließlich des adsorbierten Sekundärrohstoffs.

10. Verfahren nach einem der Ansprüche 1 bis 9, weiter umfassend:
Ausfällen (23) des Sekundärrohstoffs aus der den Sekundärrohstoff enthaltenden Desorptionslösung als Oxalat des Sekundärrohstoffs; und
Glühen (23) des Oxalats des Sekundärrohstoffs, um ein Oxid des Sekundärrohstoffs zu bilden.

11. Verwendung eines mineralhaltigen Materials, das eine natürliche Tonmischung, ein synthetisches Tonmineral, ein Mineral der Zeolithgruppe und/oder ein Mineral der Hydrargillit-Diaspor-Gruppe enthält oder daraus besteht, zum Gewinnen eines Sekundärrohstoffs aus einem Aufbereitungsgut, wobei der Sekundärrohstoff ein Metall der Seltenen Erden, ein Edelmetall, ein Metall der Nickelgruppe, ein Metall oder Halbmetall der Bor-Gruppe oder ein Metall oder Halbmetall der Kohlenstoff-Gruppe enthält oder daraus besteht, wobei das mineralhaltige Material in Form von Schlicker, Pellets oder Granulat dazu geeignet ist, den Sekundärrohstoff aus einem den Sekundärrohstoff enthaltenden Gemisch zu adsorbieren und den Sekundärrohstoff von dem mineralhaltigen Material in eine Desorptionslösung, die eine reine oder verdünnte Säure ist oder enthält, zu desorbieren,
wobei zwei Sekundärrohstoffe an dem mineralhaltigen Material adsorbiert sind, und wobei das Zusammenbringen (22) einer Desorptionslösung und des mineralhaltigen Materials einschließlich des adsorbierten Sekundärrohstoffs umfasst:
Zusammenbringen des mineralhaltigen Materials und einer ersten Desorptionslösung mit einem ersten pH-Wert, um den ersten der Sekundärrohstoffe zu desorbieren; und
Zusammenbringen des mineralhaltigen Materials und einer zweiten Desorptionslösung mit einem zweiten pH-Wert, um den zweiten der Sekundärrohstoffe zu desorbieren,
wobei sich der erste pH-Wert von dem zweiten pH-Wert unterscheidet.

## Claims

1. A method for obtaining a secondary raw material from a processed product, the secondary raw material containing or consisting of a rare earth metal, a noble metal, a nickel group metal, a boron group metal or metalloid, or a carbon group metal or metalloid, comprising:
providing (20) a mixture containing the secondary raw material and being formed on the basis of the processed product;
bringing together (21) a mineral-containing material in the form of slurry, pellets or granules and the mixture containing the secondary raw material to adsorb the secondary raw material onto the mineral-containing material, wherein the mineral-containing material contains or consists of a natural clay mixture, a synthetic clay mineral, a zeolite group mineral and/or a hydrargillite diaspore group mineral;
bringing together (22) a desorption solution, which is or contains a pure or dilute acid, and the mineral-containing material including the adsorbed secondary raw material to desorb the secondary raw material from the mineral-containing material,
wherein two secondary raw materials are adsorbed on the mineral-containing material, and wherein the bringing together (22) of a desorption solution and the mineral-containing material including the adsorbed secondary raw material comprises:
bringing together the mineral-containing material and a first desorption solution having a first pH value to desorb the first of the secondary raw materials; and
bringing together the mineral-containing material and a second desorption solution having a second pH value to desorb the second of the secondary raw materials,
wherein the first pH value differs from the second pH value.

2. The method according to claim 1, wherein the natural clay mixture is a Westerwald clay, an Upper Palatinate kaolin, or a smectitic or vermiculitic raw material, the synthetic clay mineral is laponite, the zeolite group mineral is faujasite, mordenite, or erionite, and/or the hydrargillite diaspore group mineral is bayerite, boehmite, gibbsite, or diaspore.

3. The method according to claim 1 or 2, wherein the processed product contains or consists of electrical and/or electronic scrap, waste products of a reprocessing process, waste products of a metallurgical process and/or metal-containing industrial waste.

4. The method according to any one of claims 1 to 3, wherein the rare earth metal is scandium, yttrium or a lanthanoid, the noble metal is gold, silver, platinum or a nickel group metal, the boron group metal or metalloid is indium or gallium, or the carbon group metal or metalloid is germanium.

5. The method according to any one of claims 1 to 4, wherein the providing (20) of the mixture containing the secondary raw material comprises:
comminuting (30) the processed product, in particular shredding, grinding and/or granulating the processed product;
separating (31) predetermined constituents from the comminuted processed product;
processing (32) the remaining comminuted processed product; and
separating (33) the mixture containing the secondary raw material from the processed remaining comminuted processed product.

6. The method according to any one of claims 1 to 5, wherein the bringing together of the mineral-containing material and the mixture containing the secondary raw material comprises:
mixing the mineral-containing material and the mixture containing the secondary raw material;
separating the mineral-containing material including the adsorbed secondary raw material from the mixture of mineral-containing material after a predetermined time, and the mixture containing the secondary raw material.

7. The method according to any one of claims 1 to 6, wherein the bringing together (21) of the mineral-containing material and the mixture containing the secondary raw material comprises:
passing the mixture containing the secondary raw material over the mineral-containing material.

8. The method according to any one of claims 1 to 7, wherein the bringing together of the mineral-containing material including the adsorbed secondary raw material and the desorption solution comprises:
mixing the mineral-containing material including the secondary raw material and the desorption solution;
separating the desorption solution including the secondary raw material from the mineral-containing material after a predetermined time.

9. The method according to any one of claims 1 to 8, wherein the bringing together (22) of the mineral-containing material including the adsorbed secondary raw material and the desorption solution comprises:
passing the desorption solution over the mineral-containing material including the adsorbed secondary raw material.

10. The method according any one of claims 1 to 9, further comprising:
precipitating (23) the secondary raw material from the desorption solution containing the secondary raw material as oxalate of the secondary raw material; and
annealing (23) the oxalate of the secondary raw material to form an oxide of the secondary raw material.

11. Use of a mineral-containing material containing or consisting of a natural clay mixture, a synthetic clay mineral, a zeolite group mineral, and/or a hydrargillite diaspore group mineral in order to obtain a secondary raw material from a processed product, wherein the secondary raw material contains or consists of a rare earth metal, a noble metal, a nickel group metal, a boron group metal or metalloid, or a carbon group metal or metalloid, wherein the mineral-containing material in the form of slurry, pellets or granules is adapted to adsorb the secondary raw material from a mixture containing the secondary raw material and to desorb the secondary raw material from the mineral-containing material into a desorption solution which is or contains a pure or dilute acid,
wherein two secondary raw materials are adsorbed on the mineral-containing material, and wherein the bringing together (22) of a desorption solution and the mineral-containing material including the adsorbed secondary raw material comprises:
bringing together the mineral-containing material and a first desorption solution having a first pH value to desorb the first of the secondary raw materials; and
bringing together the mineral-containing material and a second desorption solution having a second pH value to desorb the second of the secondary raw materials,
wherein the first pH value differs from the second pH value.

## Revendications

1. Procédé d'obtention d'une matière première secondaire à partir d'une matière à traiter, où la matière première secondaire contient ou est constituée d'un métal des terres rares, d'un métal précieux, d'un métal du groupe du nickel, d'un métal ou d'un semi-métal du groupe du bore ou d'un métal ou d'un semi-métal du groupe du carbone, comprenant :
la mise à disposition (20) d'un mélange contenant la matière première secondaire, formé sur la base de la matière à traiter ;
la mise en contact (21) d'un matériau riche en minéraux sous forme de barbotine, de pellets ou de granulés et du mélange contenant la matière première secondaire pour adsorber la matière première secondaire sur le matériau riche en minéraux, où le matériau riche en minéraux contient ou est constitué d'un mélange d'argiles naturelles, d'un minéral argileux synthétique, d'un minéral du groupe des zéolithes et/ou d'un minéral du groupe de l'hydrargillite et du diaspore;
la mise en contact (22) d'une solution de désorption, qui est ou contient un acide pur ou dilué, et du matériau riche en minéraux, comprenant la matière première secondaire adsorbée, pour désorber la matière première secondaire du matériau riche en minéraux,
dans lequel deux matières premières secondaires sont adsorbées sur le matériau riche en minéraux, et dans lequel la mise en contact (22) d'une solution de désorption et du matériau riche en minéraux, comprenant la matière première secondaire adsorbée, comprend:
la mise en contact du matériau riche en minéraux et d'une première solution de désorption ayant un premier pH pour désorber la première des matières premières secondaires ; et
la mise en contact du matériau riche en minéraux et d'une seconde solution de désorption ayant un second pH pour désorber la seconde des matières premières secondaires,
le premier pH étant différent du second pH.

2. Procédé selon la revendication 1, dans lequel le mélange d'argiles naturelles est une argile du Westerwald, un kaolin du Haut-Palatinat ou une matière première smectique ou vermiculitique, le minéral argileux synthétique est la laponite, le minéral du groupe des zéolithes est la faujasite, la mordénite ou l'érionite et/ou le minéral du groupe de l'hydrargillite et du diaspore est la bayerite, la boehmite, la gibbsite ou le diaspore.

3. Procédé selon la revendication 1 ou 2, dans lequel la matière à traiter contient ou et constituée de déchets électriques et/ou électroniques, de déchets d'un processus de traitement, de déchets d'un processus métallurgique et/ou de déchets industriels contenant des métaux.

4. Procédé selon l'une des revendications 1 à 3, dans lequel le métal des terres rares est le scandium, l'yttrium ou un lanthanoïde, le métal précieux est l'or, l'argent, le platine ou un métal du groupe du nickel, le métal ou semi-métal du groupe du bore est l'indium ou le gallium, ou le métal ou semi-métal du groupe du carbone est le germanium.

5. Procédé selon l'une des revendications 1 à 4, dans lequel la mise à disposition (20) du mélange contenant la matière première secondaire comprend :
le broyage (30) de la matière à traiter, en particulier le déchiquetage, le broyage et/ou la granulation de la matière à traiter;
la séparation (31) de composants prédéterminés de la matière à traiter broyée ;
le traitement (32) de la matière à traiter broyée restante ; et
la séparation (33) du mélange contenant la matière première secondaire de la matière à traiter broyée restante traitée.

6. Procédé selon l'une des revendications 1 à 5, dans lequel la mise en contact du matériau riche en minéraux et du mélange contenant la matière première secondaire comprend :
le mélange du matériau riche en minéraux et du mélange contenant la matière première secondaire ;
la séparation, après un temps prédéterminé, du matériau riche en minéraux, comprenant la matière première secondaire adsorbée, du mélange de matériau riche en minéraux et du mélange contenant la matière première secondaire.

7. Procédé selon l'une des revendications 1 à 6, dans lequel la mise en contact (21) du matériau riche en minéraux et du mélange contenant la matière première secondaire comprend :
le passage du mélange contenant la matière première secondaire sur le matériau riche en minéraux.

8. Procédé selon l'une des revendications 1 à 7, dans lequel la mise en contact du matériau riche en minéraux, comprenant la matière première secondaire adsorbée, et de la solution de désorption comprend :
le mélange du matériau riche en minéraux, comprenant la matière première secondaire, et de la solution de désorption ;
la séparation, après un temps prédéterminé, de la solution de désorption, comprenant la matière première secondaire, du matériau riche en minéraux.

9. Procédé selon l'une des revendications 1 à 8, dans lequel la mise en contact (22) du matériau riche en minéraux, comprenant la matière première secondaire adsorbée, et de la solution de désorption comprend :
le passage de la solution de désorption sur le matériau riche en minéraux comprenant la matière première secondaire adsorbée.

10. Procédé selon l'une des revendications 1 à 9, comprenant en outre :
la précipitation (23) de la matière première secondaire à partir de la solution de désorption contenant la matière première secondaire sous forme d'oxalate de la matière première secondaire ; et
le recuit (23) de l'oxalate de la matière première secondaire pour former un oxyde de la matière première secondaire.

11. Utilisation d'un matériau riche en minéraux contenant ou constitué d'un mélange d'argiles naturelles, d'un minéral argileux synthétique, d'un minéral du groupe des zéolithes et/ou d'un minéral du groupe de l'hydrargillite et du diaspore pour obtenir une matière première secondaire à partir d'une matière à traiter, où la matière première secondaire contient ou est constituée d'un métal des terres rares, d'un métal précieux, d'un métal du groupe du nickel, d'un métal ou d'un semi-métal du groupe du bore ou d'un métal ou d'un semi-métal du groupe du carbone, le matériau riche en minéraux sous forme de barbotine, de pellets ou de granulés étant adapté pour adsorber la matière première secondaire d'un mélange contenant la matière première secondaire et pour désorber la matière première secondaire du matériau riche en minéraux dans une solution de désorption qui est ou contient un acide pur ou dilué,
dans lequel deux matières premières secondaires sont adsorbées sur le matériau riche en minéraux, et dans lequel la mise en contact (22) d'une solution de désorption et du matériau riche en minéraux, comprenant la matière première secondaire adsorbée, comprend:
la mise en contact du matériau riche en minéraux et d'une première solution de désorption ayant un premier pH pour désorber la première des matières premières secondaires ; et
la mise en contact du matériau riche en minéraux et d'une seconde solution de désorption ayant un second pH pour désorber la seconde des matières premières secondaires,
le premier pH étant différent du second pH.
